# EUROPEAN PATENT SPECIFICATION

(11) **EP 0 458 791 B1**
(45) Date of publication and mention of the grant of the patent: **17.08.1994**
(21) Application number: 90900839.3
(22) Date of filing: 01.12.1989
(51) Int. Cl.: H04M 17/00, H04M 11/06

(54) **PAYPHONE SYSTEM**
FERNSPRECHBEZAHLSYSTEM
SYSTEME DE TELEPHONIE PUBLIQUE

(43) Date of publication of application: 04.12.1991
(73) Proprietor: BELL TELEPHONE MANUFACTURING COMPANY NAAMLOZE VENNOOTSCHAP, B-2018 Antwerpen (BE)
(72) Inventor: BROUWERS, Eric, Dirk, Jozef, B-2050 Antwerp (BE); TAEYMANS, Jean, Renier, Joseph, Marie-Thérèse, B-2610 Wilrijk (BE)
(86) International application number: EP8901457
(87) International publication number: WO9108637

(56) References cited:
- WO-A-86/03915
- GB-A- 2 147 769

## Description

The present invention relates to a payphone system including at least one payphone station coupled to a communication switching exchange and each payphone station including means to generate messages.

Such a system is already known in the art, e.g. from the published PCT application WO86/03915. This system includes a plurality of payphone stations operating with magnetic cards and each having a message generating means including a keyboard. By means of this keyboard a user of a payphone station may for instance key a message, constituted by the subscriber number of a telephone station, to initiate a voice communication with this telephone station, this communication being established through the switching exchange.

To be noted that this communication is only established when the magnetic card is valid. This validity is checked under the control of a central computer performing functions in common for the plurality of paystations.

It is a general object of the present invention to enlarge the application domain of a payphone system by providing new services to the users thereof.

According to the invention this object is achieved due to the fact that it further includes a common transcoder means and second stations coupled to said communication switching exchange, said transcoder means being able to convert said messages which are in an alphanumerical text code into messages in a second code with which said second stations are operating.

Another characteristic feature of the present invention is that said second station is a facsimile station and said second code is a facsimile code which is a representation of a graphical form of said alphanumerical text code.

In this way the payphone system is able to generate facsimile code messages by the cooperation of the message generating means and the transcoder means. These messages may then be transmitted to a facsimile station and advantageously by providing the transcoder means in common for a first plurality of paystations and for a second plurality of facsimile stations.

The above mentioned and other objects and features of the invention will become more apparent and the invention itself will be best understood by referring to the following description of an embodiment taken in conjunction with the accompanying drawings wherein :
Fig. 1 is a schematic diagram of a first embodiment of a payphone system according to the invention;
Fig. 2 is a schematic front view of the housing of a payphone PP whose main constituent electronic parts are shown by blocks in Fig. 1.
Fig. 3 is a schematic diagram of a second embodiment of a payphone system according to the invention.

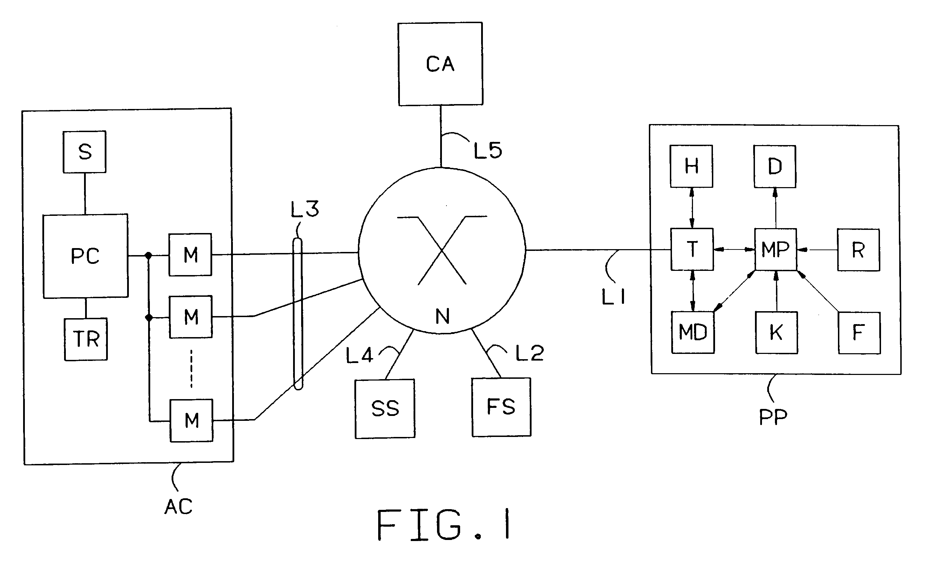

The payphone system represented in Fig. 1 includes a communication switching exchange N to which are coupled a plurality of magnetic card controlled payphone stations, telephone subscriber sets and facsimile stations, such as PP, SS and FS respectively, as well as an authorization center AC and a card administration office CA.

The coupling of PP, SS, FS and CA to the telecommunication switching exchange N is done via terminals L1, L4, L2 and L5 respectively, whilst AC is coupled to a set of terminals L3 which all have the same subscriber number. When this number is called the communication exchange will automatically search for a free terminal out of the set in the same way as for PABX line hunting.

The magnetic card controlled payphone station PP includes in its housing an AC to DC converter (not identified), a processor MP which is coupled to a magnetic card reader R, a display unit D, an alphanumerical keyboard K, a set of programmable function keys F, a telephone circuit T and a modem MD. The telephone circuit T is coupled to the switching exchange N via the terminal L1 as well to a telephone handset H and to the modem MD for transmitting and receiving data. The converter operates from the AC mains voltage to supply a suitable DC voltage to the various elements of PP.

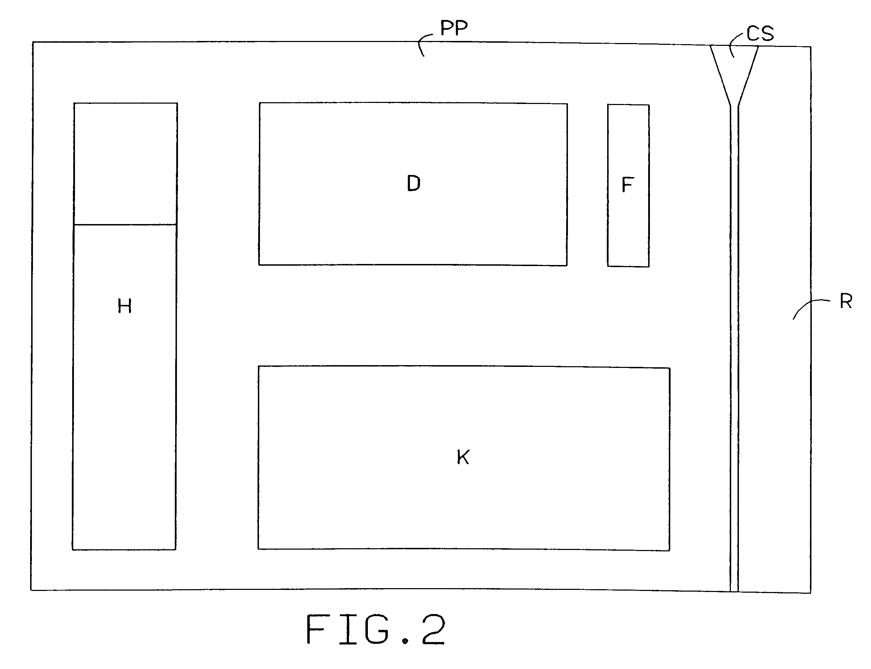

A portion of the elements H, D, K, F and R is visible on the front side of the housing of PP, as represented in Fig. 2. This housing further has a card slot CS.

The telephone circuit T is adapted to perform the usual telephone functions, such as two-to-four wire conversion, dial tone detection, dial pulse or Dual Tone Multi-frequency Signalling (DTMF) transmission, metering pulse detection, as well known in the telephone art.

The processor MP is able to scan the keys of the alphanumerical keyboard K and the programmable function keys F and to drive the display D. MP, K, F and D together constitute means to generate in the payphone station messages in an alphanumerical text code, e.g. ASCII code. The processor MP also controls the modem MD and together they are able to transmit the above alphanumerical text code messages to the switching exchange N.

The processor MP further processes data provided by the magnetic card reader R and controls the operation of telephone circuit T.

The credit card administration office CA is the computer center of a credit card company managing the credit card accounts. A plurality of such offices may be provided.

The facsimile station FS operates with a facsimile code, e.g. CCITT G3 code.

The authorization center AC includes a computer PC which is coupled to a common transcoder TR, to a plurality of modems M having access to the switching exchange N and to a storage unit S which memorizes a black list of unauthorized card numbers. The transcoder TR is able to convert the above alphanumerical text code to the above facsimile code. Modems M together with computer PC are able to receive the above alphanumerical textcode messages from switching exchange N, and to transmit these messages to the exchange after conversion by transcoder TR into facsimile code messages.

The above described telecommunication switching system operates as follows when a voice communication has to be established from the payphone station PP to the telephone subset SS.

A user of the payphone station PP introduces his magnetic card in the card slot CS and then selects the option "voice call" by means of one of the programmable function keys F. As a consequence a communication path is then established between PP and the authorization center AC and more particularly between the modem MD in PP and one of the modems M in AC. The card number read from the card by the reader R is then transmitted to the center AC where it is checked against the black list stored in the unit S under the control of the computer PC. As a result either an authorization signal or an inhibition signal is transmitted to the payphone station PP and in both cases the communication path is afterwards released. Upon the receipt of an inhibition signal in PP the call can no longer proceed, whereas upon the receipt of an authorization signal the user can proceed with the voice call by keying the destination number, e.g. of the telephone subset SS. When SS is free a conversation can take place.

In case the user of the payphone PP wants to make a "facsimile call" to a facsimile station, e.g. to FS, he introduces his magnetic card in the card slot CS and presses the appropriate programmable function key of the set F. As a consequence the switching exchange N establishes a first communication path between PP and the authorization center AC and more particularly between the modem MD in PP and one of the modems M in AC. The user then keys a message on the keyboard K, edits it on the display D with the help of the function keys F, and finally keys the identity number of the facsimile station FS. The card number, the message in text code and the above identity number are then transmitted as a message along the above first path to the center AC where the card number is checked in the same way as described above for a voice call. In case the communication is authorized an "OK" message is sent back to the the payphone station and visualised on the display D. The first communication path is then released. Then the computer PC initiates the transcoder TR to convert the text code of the received text code message to a facsimile code message. Afterwards the switching exchange N establishes a second path to the facsimile station FS with the help of the above identity number and transmits the converted message to FS. Therein the message is printed out or is visualised in any other way. When the latter station FS is busy several retries are made. If the communication is not authorised a message is sent back to the payphone PP and visualised on the display D to indicate to the user that the call cannot proceed. The first communication path is then released.

From the above it follows that N, MP, MD, PC, M constitute means to establish a first data communication path via the exchange N and between PP and the transcoder TR to transmit text code message therethrough, and to establish a second communication path via the exchange N and between the transcoder TR and the facsimile station FS.

At regular times AC delivers invoices for the different credit card companies by setting up automatic calls to the card administration offices such as CA and transmitting the billing information. These calls are set up under the control of the computer PC which stores in its memory the fixed subscriber number of the administration offices.

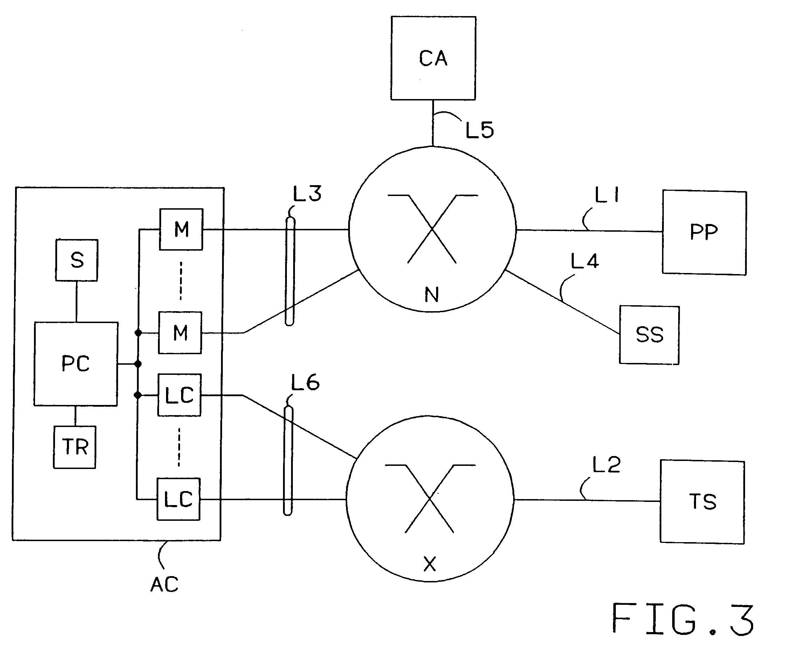

Fig. 3 shows an alternative embodiment of a payphone system according to the invention. As in Fig. 1, it includes a communication switching exchange N to which are coupled payphone stations such as PP via terminal L1, an Authorisation Center AC via a bundle of terminals L3, a Card Administration center CA via terminal L5 and a telephone subscriber set SS via terminal L4. It further includes a telex exchange X to which the Authorisation Center AC and a Telex Station TS are coupled via a bundle of terminals L6 and via terminal L2 respectively. The terminals of bundle L6 are coupled to a plurality of line circuits LC, also coupled to the computer PC. In this embodiment, the alphanumerical messages keyed in payphone station PP and having TS as a destination are transmitted to AC, converted by the transcoder TR to telex code messages (e.g. Baudot code) and transmitted via one of the line circuits LC via the telex exchange X to the telex station TS where they are printed out. This happens in a way similar to that described above in relation to Fig. 1.

## Claims

1. Payphone system including payphone stations (PP) coupled to a communication switching exchange (N) and each payphone station including means (K, MP) to generate messages, characterized in that the payphone system further includes a common transcoder means (TR) and second stations (FS) coupled to said communication switching exchange (N), said transcoder means (TR) being able to convert said messages which are in an alphanumerical text code into messages in a second code with which said second stations (FS) are operating.

2. Payphone system according to claim 1, characterized in that at least one of said second stations is a facsimile station and said second code is a facsimile code which is a representation of a graphical form of said alphanumerical text code.

3. Payphone system according to claim 2, characterized in that each of said payphone stations (PP), said facsimile station (FS) and said transcoder means (TR) are coupled to distinct terminals (L1, L2, L3) of said switching exchange (N).

4. Payphone system according to claim 1, characterized in that it further includes a telex exchange (X) to terminals (L6, L2) of which said transcoder means (TR) and at least one of said second stations (FS) are coupled, said second station being a telex station (TS) and said second code being a telex code.

5. Payphone system according to claim 3 or 4, characterized in that it includes data communication means (N, X,MP, MD, PC, M) to establish a first data communication path via said switching exchange (N) and between a said payphone station (PP) and said transcoder means (TR) and transmit said text code messages thereon, and to establish a second data communication path between said transcoder means (TR) and said second station and to transmit said second code messages thereon.

6. Payphone system according to claim 5, characterized in that said first data communication path is automatically established subsequently to the initiation of a communication by said payphone station, and said second data communication path is established subsequently to the data communication on the first path and to a destination second station indicated by an identity number included in said text code messages.

7. Payphone system according to claim 1, characterized in that said message generating means include an alphanumerical keyboard (K) and an associated processor (MP) to derive said text code messages from messages keyed on said keyboard.

8. Payphone system according to claim 9, characterized in that said message generating means further includes a display (D) to visualise said messages keyed on said keyboard.

9. Payphone station according to claim 1, characterized in that it includes programmable function keys (F) to allow selection between a voice call and a call to said second station.

10. Payphone system according to claims 3 and 5, characterized in that said data communication means include a first modem (MD) coupling said processor (MP) to a first terminal of said switching exchange (L1) and at least one second modem (M) coupling said transcoder means (TR) to a second terminal (L3) of said switching exchange via a computer (PC) able to transfer facsimile code second messages from said transcoder means (TR) to said second modem which is able to transmit said facsimile code messages to said exchange (N).

11. Payphone system according to claim 10, characterized in that it includes a plurality of second modems (M) coupling said transcoder means (TR) to respective terminals (L3) of said switching exchange (N).

12. Payphone system according to claims 4 and 5, characterized in that said data communication means include a first modem (MD) coupling said processor (MP) to a first terminal of said switching exchange (L1) and at least one second modem (M) coupling said transcoder means (TR) to a second terminal (L3) of said switching exchange via a computer (PC), said computer being coupled to a terminal (L6) of said telex exchange (X) and being able to transfer telex code second messages from said transcoder means (TR) to said telex exchange (X).

13. Payphone system according to claim 12, characterized in that it includes a plurality of line circuits (LC) coupling said transcoder means (TR) to respective terminals (L6) of said telex exchange (X).

14. Payphone system according to claim 10 or 12, characterized in that said payphone station includes a magnetic card reading device (R) coupled to said processor (MP) which is able to supply to said first modem (MP) information read on said magnetic card for transmission to said second modem and that said computer (PC) is able to perform a validity check of said information received by said second modem (M) prior to transmission of said second code message.

15. Payphone system according to claim 14, characterized in that it includes storage means (S) coupled to said computer (PC) and wherein a list of unauthorized identity numbers of said magnetic card is stored and that said validity check is performed by comparison of the identity number of said magnetic card with the identity numbers of said list.

16. Payphone system according to claim 2, characterized in that said text code is ASCII and said facsimile code is CCITT G3 facsimile code.

## Patentansprüche

1. Fernsprechbezahlsystem mit Teilnehmergeräten (PP), die an ein Vermittlungssystem (N) angeschlossen sind und jedes Teilnehmergerät Mittel (K, MP) zum Erzeugen von Nachrichten enthält, dadurch gekennzeichnet, daß das Fernsprechbezahlsystem weiterhin einen gemeinsamen Transcoder (TR) und zweite Geräte (FS) enthält, die an das Vermittlungssystem (N) angeschlossen sind, wobei der Transcoder (TR) im Stande ist die Nachrichten in einem alphanumerischen Textcode in Nachrichten mit einem zweiten Code zu wandeln, mit denen die zweiten Geräte (FS) betrieben werden.

2. Fernsprechbezahlsystem nach Anspruch 1, dadurch gekennzeichnet, daß mindestens eines der zweiten Geräte ein Faxgerät und der zweite Code ein Faxcode ist, der eine Darstellung in einer graphischen Form des alphanumerischen Textcodes ist.

3. Fernsprechbezahlsystem nach Anspruch 2, dadurch gekennzeichnet, daß jedes der Teilnehmergeräte (PP), das Faxgerät (FS) und der Transcoder (TR) an getrennten Anschlüssen (L1, L2, L3) des Vermittlungssystems (N) angeschlossen sind.

4. Fernsprechbezahlsystem nach Anspruch 1, dadurch gekennzeichnet, daß es weiterhin eine Telexvermittlung (X) enthält, an deren Anschlüsse (L2, L6) der Transcoder (TR) und mindestens eines der zweiten Geräte (FS) angeschlossen sind, wobei das zweite Gerät ein Telexgerät (TS) und der zweite Code ein Telexcode ist.

5. Fernsprechbezahlsystem nach Anspruch 3 oder 4, dadurch gekennzeichnet, daß es Datenübertragsungsmittel (N, X, MP, MD, PC, M) enthält, um einen ersten Datenübertragungsweg über das Vermittlungssystem (N) und zwischen einem Teilnehmergerät (PP) und dem Transcoder (TR) herzustellen und darüber den Textcode zu übertragen, und einen zweiten Datenübertragungsweg zwischen dem Transcoder (TR) und dem zweiten Gerät herzustellen und darüber den zweiten Code zu übertragen.

6. Fernsprechbezahlsystem nach Anspruch 5, dadurch gekennzeichnet, daß der erste Datenübertragungsweg automatisch nach der Einleitung einer Übertragung durch das Teilnehmergerät hergestellt wird und der zweite Datenübertragungsweg nach der Datenübertragung auf dem ersten Weg hergestellt wird und zu einem zweiten Gerät gerichtet ist, das durch eine Identifizierungsnummer ein Textcode angegeben ist.

7. Fernsprechbezahlsystem nach Anspruch 1, dadurch gekennzeichnet, daß die Mittel zum Erzeugen einer Nachricht ein alphanumerisches Tastenfeld (K) und einen angeschlossenen Prozessor (MP) enthalten, um den Textcode von den mit dem Tastenfeld eingegebenen Nachrichten abzuleiten.

8. Fernsprechbezahlsystem nach Anspruch 7, dadurch gekennzeichnet, daß die Mittel zum Erzeugen von Nachrichten weiterhin eine Anzeige (D) zur Darstellung der über die Tastatur eingegebenen Nachrichten enthalten.

9. Fernsprechbezahlsystem nach Anspruch 1, dadurch gekennzeichnet, daß es programmierbare Funktionstasten (F) enthält, um eine Auswahl zwischen einem Gespräch und einem Ruf zu dem zweiten Gerät zu treffen.

10. Fernsprechbezahlsystem nach den Ansprüchen 3 und 5, dadurch gekennzeichnet, daß die Datenübetragungsmittel ein erstes Modem (MD), das den Prozessor (MP) mit einem ersten Anschluß (L1) des Vermittlungssystem verbindet und mindestens ein zweites Modem (M) aufweisen, das den Transcoder (TR) mit einem zweiten Anschluß (L3) des Vermittlungssystems über einen Computer verbindet, um zweite Nachrichten im Faxcode von dem Transcoder (TR) zum zweiten Modem zu übermitteln, das die Nachrichten im Faxcode zum Vermittlungssystem (N) übermittelt.

11. Fernsprechbezahlsystem nach Anspruch 10, dadurch gekennzeichnet, daß es eine Vielzahl von zweiten Modems (M) aufweist, die den Transcoder (TR) an entsprechende Anschlüsse (L3) des Vermittlungssystems anschließen kann.

12. Fernsprechbezahlsystem nach den Ansprüchen 4 und 5, dadurch gekennzeichnet, daß die Datenübertragungsmittel ein erstes Modem (MD) aufweisen, das den Prozessor (MP) mit einem ersten Anschluß (L1) des Vermittlungssystems verbindet, und mindestens ein zweites Modem (M) aufweist, das den Transcoder (TR) mit einen zweiten Anschluß (L3) des Vermittlungssystems über einen Computer (PC) verbindet, wobei der Computer an einen Anschluß (L6) der Telexvermittlung angeschlossen ist und zweite Nachrichten im Telexcode vom Transcoder (TR) zur Telexvermittlung (X) übertragen kann.

13. Fernsprechbezahlsystem nach Anspruch 12, dadurch gekennzeichnet, daß es eine Vielzahl von Leitungsschaltungen (LC) enthält, die den Transcoder (TR) mit entsprechenden Anschlüssen (L6) der Telexvermittlung (X) verbinden.

14. Fernsprechbezahlsystem nach Anspruch 10 oder 12, dadurch gekennzeichnet, daß das Teilnehmergerät eine Magnetkartenleseeinrichtung (R) enthält, die an den Prozessor (MP) angeschlossen ist, der an das erste Modem (MD) von einer Magnetkarte gelesene Informationen zur Übertragung zum zweiten Modem liefern kann, und der Computer (PC) eine Gültigkeitsprüfung der vom zweiten Modem erhaltenen Information vor der Übertragung der Nachrichten im zweiten Code ausführen kann.

15. Fernsprechbezahlsystem nach Anspruch 14, dadurch gekennzeichnet, daß es Speichermittel (S) enthält, die an den Computer (PC) angeschlossen sind und in denen eine Liste mit nicht zugelassenen Identifizierungsnummern der Magenetkarten gespeichert ist und daß die Gültigkeitsprüfung durch Vergleich der Identifizierungsnumnmer der Magnetkarte mit den gespeicherten erfolgt.

16. Fernsprechbezahlsystem nach Anspruch 2, dadurch gekennzeichnet, daß der Textcode gleich dem ASCII- und der Faxcode gleich dem CCITT G3- Code ist.

## Revendications

1. Système téléphonique public comportant des postes (PP) couplés à un central de télécommunication (N), chaque poste téléphonique public incluant des moyens (K, MP) pour générer des messages, système caractérisé par le fait que le système téléphonique public comporte en outre des moyens formant transcodeur commun (TR) et des seconds postes (FS) couplés audit central de télécommunication (N), lesdits moyens formant transcodeur (TR) pouvant convertir lesdits messages, qui sont en un code texte alphanumérique, en messages en un second code avec lequel travaillent lesdits seconds postes (FS).

2. Système téléphonique public selon la revendication 1,
caractérisé par le fait qu'au moins l'un desdits seconds postes est un poste de télécopie et que ledit second code est un code de télécopie qui est une représentation d'une forme graphique dudit code texte alphanumérique.

3. Système téléphonique public selon la revendication 2,
caractérisé par le fait que chacun desdits postes téléphoniques publics (PP), dudit poste de télécopie (FS) et desdits moyens formant transcodeur (TR) sont couplés à des terminaux distincts (L1, L2, L3) dudit central de télécommunication (N).

4. Système téléphonique public selon la revendication 1, caractérisé par le fait qu'il comporte en outre un central telex (X) aux terminaux (L6, L2) duquel sont couplés lesdits moyens formant transcodeur (TR) et au moins l'un desdits seconds postes (FS), ledit second poste étant un poste telex (TS) et ledit second code étant un code telex.

5. Système téléphonique public selon la revendication 4 ou 4,
caractérisé par le fait qu'il comporte des moyens de communication des données (N, X,MP, MD, PC, M) pour établir une premier chemin de communication des données par l'intermédiaire dudit central de télécommunication (N) et entre un dit poste téléphonique public (PP) et lesdits moyens formant transcodeur (TR) et pour leur transmettre lesdits messages en code texte, et pour établir un second chemin de communication des données entre lesdits moyens formant transcodeur (TR) et ledit second poste et pour lui transmettre lesdits messages en un second code.

6. Système téléphonique public selon la revendication 5,
caractérisé par le fait que ledit premier chemin de communication des données s'établit automatiquement à la suite du déclenchement d'une communication par ledit poste téléphonique public et que ledit second chemin de communication des données s'établit à la suite de la communication des données sur le premier chemin et vers un second poste de destination indiqué par un numéro d'identité inclus dans lesdits messages en code texte.

7. Système téléphonique public selon la revendication 1,
caractérisé par le fait que lesdits moyens de génération d'un message incluent un clavier alphanumérique (K) et un processeur associé (MP) pour dériver lesdits messages en cours de texte des messages tapés sur ledit clavier.

8. Système téléphonique public selon la revendication 9,
caractérisé par le fait que lesdits moyens de génération d'un message comportent en outre un visuel (D) pour visualiser lesdits messages tapés sur ledit clavier.

9. Poste téléphonique public selon la revendication 1,
caractérisé par le fait qu'il inclut des touches de fonction programmables (F) pour permettre la sélection entre un appel vocal et un appel audit second poste.

10. Système téléphonique public selon les revendications 3 et 5,
caractérisé par le fait que lesdits moyens de communication des données incluent un premier modem (MD) couplant ledit processeur (MP) à un premier terminal (L1) dudit central de télécommunication et au moins un second modem (M) couplant lesdits moyens formant transcodeur (TR) à un second terminal (L3) dudit central de télécommunication par l'intermédiaire d'un ordinateur (PC) qui peut transférer les seconds messages, en code télécopie, provenant desdits moyens formant transcodeur (TR), audit second modem qui peut transmettre lesdits messages en code télécopie audit central de télécommunication (N).

11. Système téléphonique public selon la revendication 10,
caractérisé par le fait qu'il comporte une pluralité de seconds modems (M) couplant lesdits moyens formant transcodeurs (TR) aux terminaux respectifs (L3) dudit central de télécommunication (N).

12. Système téléphonique public selon les revendications 4 et 5,
caractérisé par le fait que lesdits moyens de communication des données incluent un premier modem (MP) couplant ledit processeur (MP) à un premier terminal (L1) dudit central de télécommunication et au moins un second modem (M) couplant lesdits moyens formant transcodeur (TR) à un second terminal (L3) dudit central de télécommunication par l'intermédiaire d'un ordinateur (PC), ledit ordinateur étant couplé à un terminal (L6) dudit central telex (X) et pouvant transférer les seconds messages en code telex, provenant desdits moyens formant transcodeur (TR), audit central telex (X).

13. Système téléphonique public selon la revendication 12,
caractérisé par le fait qu'il inclut une pluralité de circuits en ligne (LC) couplant lesdits moyens formant transcodeur (TR) aux terminaux respectifs (L6) dudit central telex (X).

14. Système téléphonique public selon la revendication 10 ou 12,
caractérisé par le fait que ledit poste téléphonique public comporte un dispositif (R) de lecture des cartes magnétiques couplé audit processeur (MP) et pouvant envoyer audit premier modem (MP) l'information lue sur ladite carte magnétique pour transmission audit second modem, et par le fait que ledit ordinateur (PC) peut procéder à une vérification de validité de ladite information reçue par ledit second modem (M) avant transmission dudit message en le second code.

15. Système téléphonique public selon la revendication 14,
caractérisé par le fait qu'il comporte des moyens de mémorisation (S) qui sont couplés audit ordinateur (PC) et dans lesquels est mémorisée une liste de numéros d'identité non autorisés desdites cartes magnétiques et par le fait que ladite vérification de validité s'effectue par comparaison du numéro d'identité de ladite carte magnétique avec les numéros d'identité de ladite liste.

16. Système téléphonique public selon la revendication 2,
caractérisé par le fait que ledit code texte est le code ASCII et que ledit code télécopie est le code télécopie CCITT G3.
